# FASCICULE DE BREVET EUROPEEN

(11) **EP 3 488 168 B1**
(45) Date de publication et mention de la délivrance du brevet: **13.05.2020**
(21) Numéro de dépôt: 17751807.3
(22) Date de dépôt: 20.07.2017
(51) Int. Cl.: F28D 1/04, H01M 10/6556, H01M 10/6557, H01M 10/655

(54) **DISPOSITIF DE REFROIDISSEMENT D'UNE UNITÉ DE STOCKAGE D'ÉNERGIE, ENSEMBLE ASSOCIE**
VORRICHTUNG ZUM KÜHLEN EINER ENERGIESPEICHEREINHEIT UND ZUGEHÖRIGE ANORDNUNG
DEVICE FOR COOLING AN ENERGY STORAGE UNIT, AND ASSOCIATED ASSEMBLY

(30) Priorité: 25.07.2016 FR 1657111
(43) Date de publication de la demande: 29.05.2019
(73) Titulaire: Valeo Systemes Thermiques, 78320 Le Mesnil Saint Denis (FR)
(72) Inventeur: ROBILLON, Lionel, 72210 LA SUZE SUR SARTHE (FR); MULLER, Jean Damien, 72210 LA SUZE SUR SARTHE (FR); IBRAHIMI, Mohamed, 72210 LA SUZE SUR SARTHE (FR); POURMARIN, Alain, 72210 LA SUZE-SUR-SARTHE (FR); BARRE, Boris, 72210 LA SUZE-SUR-SARTHE (FR)
(74) Mandataire: Tran, Chi-Hai
(86) Numéro de dépôt international: PCT/FR2017/051984
(87) Numéro de publication internationale: WO 2018/020108

(56) Documents cités:
- DE-A1- 19 646 349
- DE-A1-102009 015 351
- US-A- 5 562 157
- US-A1- 2016 043 451

## Description

La présente invention concerne un dispositif de refroidissement d'une unité de stockage d'énergie électrique, notamment pour une batterie de véhicule automobile. En particulier, la présente invention se rapporte à un dispositif conforme au préambule de la revendication 1, et tel que divulgué dans le document DE 10 2009 015 351 A1.

On connait par la demande de brevet US2014013774 un échangeur de chaleur à tubes pour contrôler la température de dispositifs de stockage d'énergie, notamment pour véhicule automobile.

On connait également de la demande US2007199333 un échangeur de chaleur à plaques.

Toutefois, un inconvénient de ces deux mises en œuvre consiste en la modularité de tels échangeurs. En effet, il s'avère difficile de prévoir des échangeurs de forme complexe du fait de la structure élémentaire de ces échangeurs.

L'invention vise notamment à améliorer au moins certains des inconvénients de l'art antérieur.

Pour ce faire, l'invention a pour objet un dispositif de refroidissement d'une unité de stockage d'énergie électrique, le dispositif comprenant au moins un échangeur à tubes et un échangeur à plaques, l'échangeur à tubes et l'échangeur à plaques étant reliés fluidiquement de sorte à former un circuit de circulation d'un fluide de refroidissement.

De ce fait, grâce à la combinaison de plusieurs types d'échangeurs, connectés entre eux de sorte à former un circuit de fluide, cela permet de mettre en œuvre un dispositif de refroidissement modulable. Un tel dispositif peut être adapté, par exemple en termes de nombre d'échangeur de chaleur à plaques ou d'échangeur de chaleur à tubes, ce qui permet d'adapter la forme ou la taille que doit présenter le dispositif.

Selon un aspect de l'invention, l'échangeur à plaques et l'échangeur à tubes présentent une interface de connexion complémentaire.

De ce fait, on assure une certaine étanchéité du dispositif de refroidissement et on facilite la connexion entre les deux types d'échangeur.

Dans une variante, l'échangeur à plaques et l'échangeur à tubes sont connectés par brasage.

Ainsi, l'étanchéité est assurée par des moyens de connexion qui assurent une solidité mécanique nécessaire au milieu dans lequel l'échangeur est placé.

On pourrait également prévoir un échangeur à plaques relié à un échangeur à tubes par collage.

On pourrait encore prévoir un échangeur à plaques et un échangeur à tubes reliés par soudage.

Dans un mode de réalisation, l'échangeur à tubes comprend une pluralité de tubes.

Ainsi, cela permet d'utiliser des échangeurs connus et donc de limiter les coûts de réalisation de l'invention.

Selon un aspect de l'invention, l'échangeur à plaques comprend au moins une paire de plaques formant des canaux de circulation du fluide de refroidissement.

Ainsi, cela permet d'utiliser des échangeurs connus et donc de limiter les coûts de réalisation de l'invention.

Dans un mode de réalisation de l'invention, les plaques sont en aluminium embouti.

On pourrait également prévoir, selon un autre mode de réalisation, des plaques en aluminium déformées par hydroformage.

On pourrait encore prévoir, selon un autre mode de réalisation, des plaques en aluminium formées par roll bounding.

Selon un autre aspect de l'invention, l'échangeur à tubes est placé entre plusieurs paires de plaques.

Dans une variante de l'invention, l'échangeur à plaques est placé entre plusieurs tubes.

Dans un autre mode de réalisation de l'invention, les plaques présentant une épaisseur supérieure à l'épaisseur des tubes.

L'invention concerne également un ensemble de refroidissement d'une unité de stockage d'énergie électrique, l'ensemble comprenant au moins un dispositif selon l'un des modes de réalisation décrits.

Selon un mode de réalisation de l'invention, l'ensemble comprend en outre au moins un autre échangeur à plaques et/ou un autre échangeur à tubes.

L'invention sera mieux comprise et d'autres détails, caractéristiques et avantages de l'invention apparaîtront plus clairement à la lumière de la description suivante, fournie à titre d'exemple illustratif et non limitatif et en référence aux dessins annexés parmi lesquels :
- la figure 1 est une vue en perspective d'un ensemble selon un mode de réalisation de l'invention ;
- la figure 2 est une de dessus de l'ensemble selon le mode de réalisation de la figure 1 ;
- la figure 3 est une vue détaillée en perspective d'un dispositif selon un mode de réalisation de l'invention ; et
- la figure 4 est une vue détaillée latérale d'un dispositif selon un mode de réalisation de l'invention.

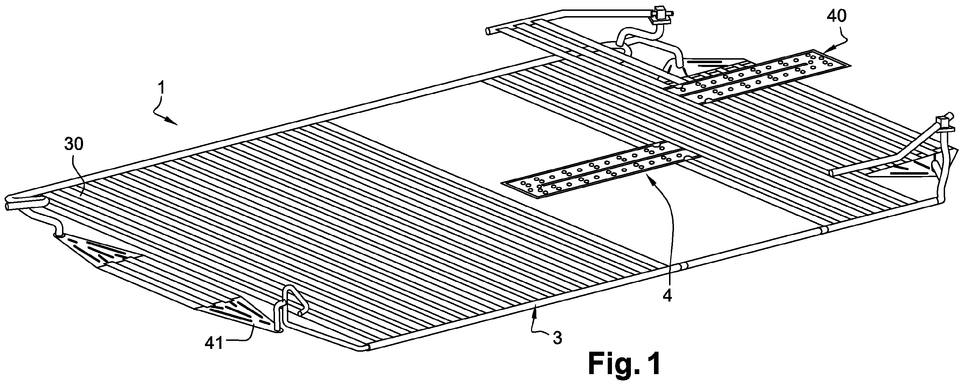

On présente maintenant, en relation avec les **figures 1 à 5**, un premier mode de réalisation de l'invention.

Une unité de réserve d'énergie électrique peut par exemple être une batterie électrique, notamment une batterie électrique pour véhicule automobile. Une telle batterie électrique peut par exemple être composée d'une pluralité de cellules électriques. Afin d'obtenir une meilleur capacité de stockage électrique, on peut être amené à utiliser plusieurs batteries électriques disposées selon un aménagement avantageux de sorte à utiliser les espaces laissés disponibles dans un véhicule automobile. De cette façon, il s'avère important de pouvoir moduler également l'ensemble de refroidissement de cette unité de stockage d'énergie électrique afin d'optimiser son refroidissement et donc son rendement et sa durée de vie.

Comme illustré sur ces figures, le dispositif 2 de refroidissement d'une unité de réserve d'énergie électrique comprend au moins un échangeur à tubes 3 et un échangeur à plaques 4.

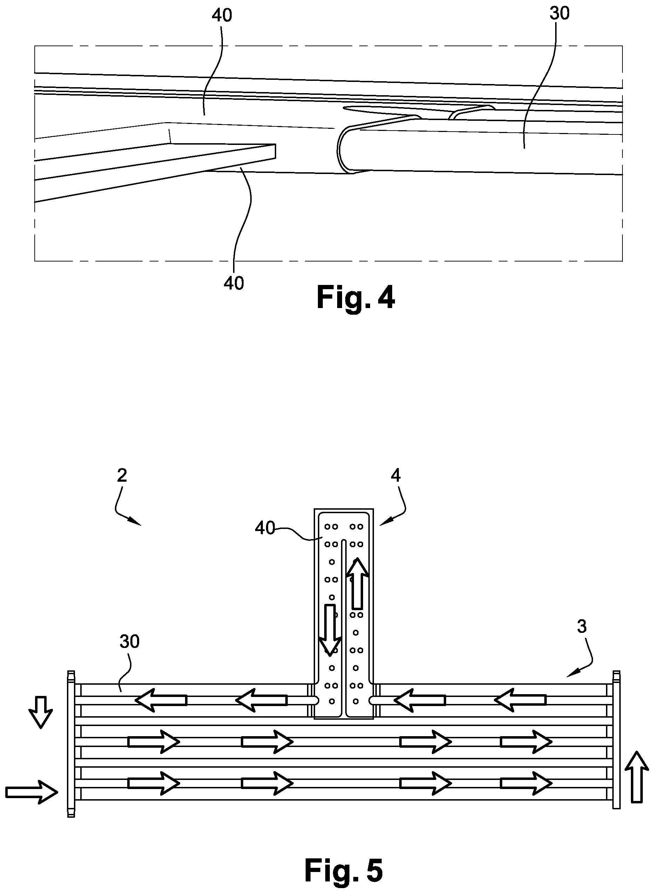

Le dispositif de refroidissement 2 illustré en figure 5 comprend un échangeur à plaques 4 et un échangeur à tubes 3.

Dans cet exemple, l'échangeur à tubes 3 comprend une pluralité de tubes 30 de circulation de fluide de refroidissement.

Quant à l'échangeur à plaques illustré, il comprend dans cet exemple une paire de plaques 40 formant des canaux de circulation du fluide de refroidissement.

Ces canaux de refroidissement peuvent présenter un profil en forme de U. Ils peuvent également présenter un profil en S.

Bien évidemment, on pourrait mettre en œuvre un échangeur à plaques qui comporte une pluralité de paire de plaques 40.

Dans cet exemple, les plaques sont embouties. De la sorte, les surfaces des plaques comportent des perturbateurs ce qui permet d'améliorer la circulation du fluide de refroidissement.

L'échangeur à tubes 3 et l'échangeur à plaques 4 sont reliés fluidiquement de sorte à former un circuit de circulation d'un fluide de refroidissement.

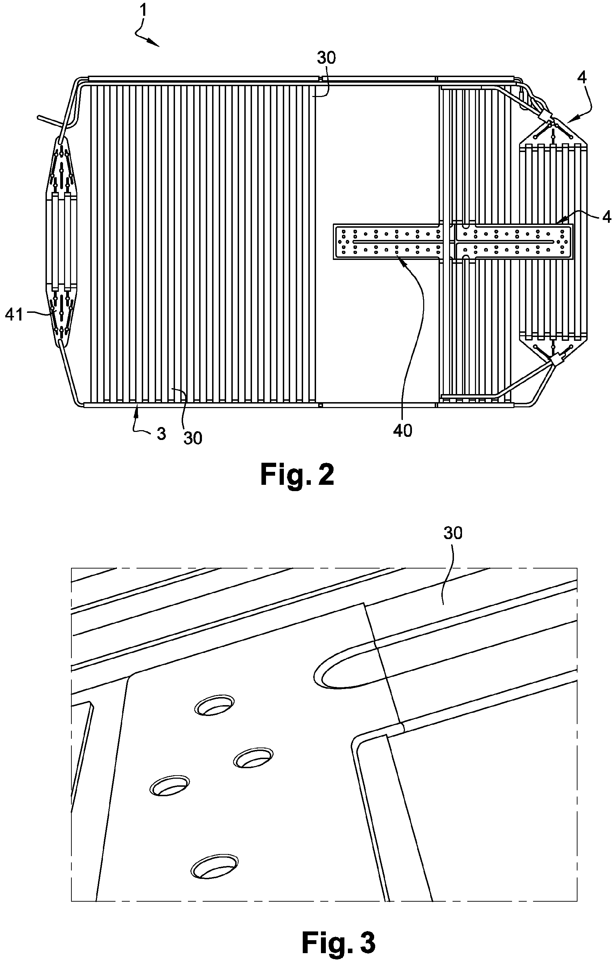

Comme plus particulièrement visible sur les figures 3 et 4, l'échangeur à plaques 4 et l'échangeur à tubes 3 présentent une interface de connexion complémentaire.

Comme illustré en figure 4, l'échangeur à plaques 4 présente une épaisseur supérieure à l'échangeur à tubes 3. En d'autres termes, l'échangeur à tubes présente une plus faible épaisseur au niveau de ses tubes que l'échangeur à plaques.

Dans cet exemple, les plaques 40 présentent une épaisseur comprise entre 2mm et 50mm tandis que les tubes présentent une épaisseur comprise entre 1,5mm et 49mm.

De ce fait, les plaques 40 présentent une épaisseur supérieure à l'épaisseur des tubes 30.

Le dispositif de refroidissement illustré en figure 5 présente un échangeur à plaques 4 placé entre plusieurs tubes 30.

Plus particulièrement, on voit que les plaques 40 de l'échangeur à plaques 4 sont reliées à l'échangeur à tubes par deux tubes 30.

Selon d'autres modes de réalisation, on pourrait envisager des plaques 40 placées entre plus de deux tubes 30 de l'échangeur à tubes 3.

On pourrait également envisager des plaques reliées à un unique tube.

Selon un mode de réalisation particulier de l'invention, l'échangeur à plaques 4 et l'échangeur à tubes 3 sont connectés par brasage. En d'autres termes, un ou plusieurs tubes 30 sont reliés à une ou plusieurs paires de plaques 40 par brasage.

De cette manière, l'étanchéité est assurée entre l'échangeur à tubes 3 et l'échangeur à plaques 4 au niveau de l'interface de connexion.

Comme illustré sur les figures 1 et 2, l'ensemble de refroidissement comprend une pluralité de dispositifs de refroidissement.

De cette manière, l'ensemble de refroidissement permet de refroidir une pluralité de cellules de stockage d'énergie et s'adapte à une forme souhaitée.

De ce fait, l'ensemble est modulable car les dimensions dépendent du nombre de dispositifs de refroidissement mis en œuvre, et d'échangeurs supplémentaires ajoutés.

L'ensemble peut également comprendre au moins un autre échangeur à plaques et/ou échangeur à tubes.

Les différents dispositifs sont également reliés fluidiquement de sorte à former un circuit de circulation d'un fluide de refroidissement.

Le circuit peut être complété par au moins un collecteur d'entrée et/ou de sortie, ménagés dans le circuit de circulation de fluide.

Il peut également y avoir, selon un mode de réalisation, une entrée de fluide et une sortie de fluide.

L'ensemble illustré en figure 1 comprend quatre dispositifs de refroidissement 2 ainsi que deux échangeurs de chaleur à tube 3 supplémentaires.

Pour deux des dispositifs de refroidissement illustrés en figure 1, l'échangeur à tube est placé entre plusieurs paires de plaques 41.

Dans cet exemple, les plaques 41 présentent un profil sensiblement triangulaire. Toutefois, on pourrait imaginer d'autres modes de réalisation dans lesquels les plaques 41 présenteraient un profil différent, tel qu'un profil rectangulaire, losange.

Pour deux des dispositifs de refroidissement illustrés en figure 1, l'échangeur à plaques est placé entre plusieurs tubes.

Les deux échangeurs de chaleur à tube additionnels sont, dans cet exemple, placés en série avec les dispositifs de refroidissement.

On remarque sur la figure 1 que l'ensemble de refroidissement n'est pas nécessairement plan. En effet, dans ce mode de réalisation, trois des dispositifs sont placés sur un plan différent.

L'invention ne se limite pas aux modes de réalisation illustrés sur les différentes figures. On pourrait bien évidemment imaginer des modes de réalisation présentant d'autres configurations combinant un autre nombre de dispositifs de refroidissement.

On pourrait également imaginer d'autres modes de réalisation dans lesquels il existe plusieurs circuits indépendants.

## Revendications

1. Dispositif (2) de refroidissement d'une unité de réserve d'énergie électrique, le dispositif comprenant au moins un échangeur à tubes (3), le dispositif étant **caractérisé en ce qu'**il comporte par ailleurs un échangeur à plaques (4), l'échangeur à tubes (3) et l'échangeur à plaques (4) étant reliés fluidiquement de sorte à former un circuit de circulation d'un fluide de refroidissement.

2. Dispositif (2) selon la revendication 1, l'échangeur à plaques (4) et l'échangeur à tubes (3) présentant une interface de connexion complémentaire.

3. Dispositif selon la revendication précédente, l'échangeur à plaques (4) et l'échangeur à tubes (3) étant connectés par brasage.

4. Dispositif selon l'une des revendications précédentes, l'échangeur à tubes (3) comprenant une pluralité de tubes (30).

5. Dispositif selon l'une des revendications précédentes, l'échangeur à plaques comprenant au moins une paire de plaques (40, 41) formant des canaux de circulation du fluide de refroidissement.

6. Dispositif selon la revendication précédente, les plaques (40, 41) étant en aluminium embouti.

7. Dispositif selon l'une des revendications 5 ou 6, l'échangeur à tubes (3) étant placé entre plusieurs paires de plaques (40, 41).

8. Dispositif selon la revendication 4, l'échangeur à plaques (4) étant placé entre plusieurs tubes (30).

9. Dispositif selon les revendications 4 et 5, les plaques (40, 41) présentant une épaisseur supérieure à l'épaisseur des tubes (30).

10. Ensemble de refroidissement (1) d'une unité de stockage d'énergie électrique, l'ensemble (1) comprenant au moins un dispositif (2) selon l'une des revendications précédentes.

11. Ensemble selon la revendication précédente, l'ensemble comprenant en outre au moins un autre échangeur à plaques (4) et/ou un autre échangeur à tubes (3).

## Patentansprüche

1. Vorrichtung (2) zur Kühlung einer Speichereinheit für elektrische Energie, wobei die Vorrichtung mindestens einen Rohrwärmetauscher (3) umfasst, wobei die Vorrichtung **dadurch gekennzeichnet ist, dass** sie im Übrigen einen Plattenwärmetauscher (4) beinhaltet, wobei der Rohrwärmetauscher (3) und der Plattenwärmetauscher (4) fluidisch so verbunden sind, dass sie einen Kühlmedium-Umlaufkreis bilden.

2. Vorrichtung (2) nach Anspruch 1, wobei der Plattenwärmetauscher (4) und der Rohrwärmetauscher (3) eine komplementär ausgebildete Anschlussschnittstelle aufweisen.

3. Vorrichtung nach dem vorhergehenden Anspruch, wobei der Plattenwärmetauscher (4) und der Rohrwärmetauscher (3) durch Löten verbunden sind.

4. Vorrichtung nach einem der vorhergehenden Ansprüche, wobei der Rohrwärmetauscher (3) eine Mehrzahl von Rohren (30) umfasst.

5. Vorrichtung nach einem der vorhergehenden Ansprüche, wobei der Plattenwärmetauscher mindestens ein Paar Platten (40, 41) umfasst, das Umlaufkanäle für das Kühlmedium bildet.

6. Vorrichtung nach dem vorhergehenden Anspruch, wobei die Platten (40, 41) aus tiefgezogenem Aluminium sind.

7. Vorrichtung nach einem der Ansprüche 5 oder 6, wobei der Rohrwärmetauscher (3) zwischen mehreren Paaren von Platten (40, 41) angeordnet ist.

8. Vorrichtung nach Anspruch 4, wobei der Plattenwärmetauscher (4) zwischen mehreren Rohren (30) angeordnet ist.

9. Vorrichtung nach den Ansprüchen 4 und 5, wobei die Platten (40, 41) eine Dicke aufweisen, die größer als die Dicke der (30) ist.

10. Anordnung zur Kühlung (1) einer Speichereinheit für elektrische Energie, wobei die Anordnung (1) mindestens eine Vorrichtung (2) nach einem der vorhergehenden Ansprüche umfasst.

11. Anordnung nach dem vorhergehenden Anspruch, wobei die Anordnung ferner mindestens einen weiteren Plattenwärmetauscher (4) und/oder einen weiteren Rohrwärmetauscher (3) umfasst.

## Claims

1. Device (2) for cooling an electrical energy storage unit, the device comprising at least one tube exchanger (3), the device being **characterized in that** it also comprises a plate exchanger (4), the tube exchanger (3) and the plate exchanger (4) being in fluid communication such as to form a circuit for circulation of a cooling fluid.

2. Device (2) according to Claim 1, the plate exchanger (4) and the tube exchanger (3) having a complementary connection interface.

3. Device according to the preceding claim, the plate exchanger (4) and the tube exchanger (3) being connected by brazing.

4. Device according to one of the preceding claims, the tube exchanger (3) comprising a plurality of tubes (30).

5. Device according to one of the preceding claims, the plate exchanger comprising at least one pair of plates (40, 41) forming channels for circulation of the cooling fluid.

6. Device according to the preceding claim, the plates (40, 41) being made of stamped aluminum.

7. Device according to either of Claims 5 and 6, the tube exchanger (3) being placed between a plurality of pairs of plates (40, 41).

8. Device according to Claim 4, the plate exchanger (4) being placed between a plurality of tubes (30) .

9. Device according to Claims 4 and 5, the plates (40, 41) having a thickness greater than the thickness of the tubes (30).

10. Cooling assembly (1) of an electrical energy storage unit, the assembly (1) comprising at least one device (2) according to one of the preceding claims.

11. Assembly according to the preceding claim, the assembly also comprising at least one other plate exchanger (4) and/or one other tube exchanger (3).
